# EUROPÄISCHE PATENTSCHRIFT

(11) **EP 0 865 237 B1**
(45) Veröffentlichungstag und Bekanntmachung des Hinweises auf die Patenterteilung: **16.02.2000**
(21) Anmeldenummer: 96938189.6
(22) Anmeldetag: 13.11.1996
(51) Int. Cl.: A01L 3/00, A01L 11/00, A01L 15/00

(54) **VORRICHTUNG ZUR BEWEGUNGSANALYSE UND LAHMHEITSDIAGNOSTIK BEI TIEREN**
DEVICE FOR THE ANALYSIS OF MOVEMENT AND FOR THE DIAGNOSIS OF LAMENESS IN ANIMALS
DISPOSITIF POUR ANALYSER DES MOUVEMENTS ET DIAGNOSTIQUER UNE CLAUDICATION CHEZ DES ANIMAUX

(30) Priorität: 09.12.1995 DE 19546022
(43) Veröffentlichungstag der Anmeldung: 23.09.1998
(73) Patentinhaber: Marquis, Helmut, 89542 Herbrechtingen (DE)
(72) Erfinder: Marquis, Helmut, 89542 Herbrechtingen (DE)
(74) Vertreter: Lorenz, Werner, Dipl.-Ing.
(86) Internationale Anmeldenummer: EP9604958
(87) Internationale Veröffentlichungsnummer: WO9721345

(56) Entgegenhaltungen:
- DE-C- 3 804 296
- DE-U- 9 107 369
- US-A- 4 090 566
- US-A- 4 703 217

## Beschreibung

Die Erfindung betrifft eine Vorrichtung zur Bewegungsanalyse und Lahmheitsdiagnostik bei Tieren, insbesondere bei Pferden, mit wenigstens einem mit mindestens einem Sensor versehenen Hufschuh, welcher über wenigstens einen Huf des Tieres stülpbar ist, wobei der Sensor in einer Metallplatte im Bodenbereich des Hufschuhs angeordnet ist und von dem Sensor erzeugte Signale einer elektronischen Auswerteeinrichtung zuführbar sind.

Eine gattungsgemäße Vorrichtung ist aus der DE-GM 91 07 369.3 bekannt.

Der Hufschuh wird hierbei mittels Bändern oder Riemen am Bein des Tieres befestigt, so daß über in dem Hufschuh vorgesehene und als piezoelektrische Kraftmeßbüchsen ausgebildete Sensoren die Kraftverteilung beim Aufsetzen des Hufes des Tieres auf den Boden gemessen werden kann. Die von den Sensoren erzeugten Signale werden an eine seitlich am Tier angebrachte Auswertungseinrichtung weitergeleitet, in welcher auf elektronischem Wege Druckverteilungsbilder aufgezeichnet werden können. Die Auswertungseinrichtung wird nach dem Einlesen der von den Sensoren erzeugten Signale von dem Tier abgenommen und die gespeicherten Meßwerte zu Druckverteilungsbildern verarbeitet. Aus diesen Druckverteilungsbildern kann auf Krankheiten und/oder Schäden am Bewegungsapparat des Tieres rückgeschlossen werden, was insbesondere bei Renn- und Turnierpferden von Vorteil ist, da bereits frühzeitig Schäden am Bewegungsapparat erkannt und entsprechend behandelt werden können.

Nachteilig an der in der genannten Druckschrift offenbarten Vorrichtung ist jedoch, daß vor dem Anbringen des Hufschuhs gegebenenfalls vorhandene Hufeisen von den Hufen des Tieres entfernt werden müssen.

Dies ist einerseits aufwendig und führt andererseits zu falschen Meßergebnissen, da das Tier ohne Hufeisen anders auftreten wird als mit Hufeisen, so daß auch die über die Sensoren ermittelten Druckverteilungen nicht ganz der Realität entsprechen.

Ein weiterer Nachteil der bekannten Vorrichtung besteht darin, daß aufgrund des Befestigens des Hufschuhs mittels Gurten oder Bändern an den Beinen des Tieres es nicht möglich ist, das Tier im Galopp laufen zu lassen, da ansonsten die Gefahr besteht, daß die Hufschuhe ungewollt von den Beinen des Tieres abrutschen.

Der vorliegenden Erfindung liegt daher die Aufgabe zugrunde, eine Vorrichtung zur Bewegungsanalyse und Lahmheitsdiagnostik bei Tieren vorzusehen, mittels der realistische Meßergebnisse erzielbar sind und die in sämtlichen Gangarten des Tieres zuverlässig arbeitet.

Erfindungsgemäß wird diese Aufgabe dadurch gelöst, daß der Hufschuh aus einem elastisch verformbaren Werkstoff gefertigt ist, und einen Hohlraum enthält, welcher mit einem unter Überdruck stehenden Medium beaufschlagbar ist.

Durch das Vorsehen eines mit einem unter Überdruck stehenden Medium beaufschlagbaren Hohlraums kann der Hufschuh in einfacher Weise so fest an den Beinen des Tieres anliegen, daß ein ungewolltes Verrutschen oder Abrutschen des Hufschuhs in allen Gangarten, auch im Galopp, vermieden wird. Die Andrückkraft bzw. Anpreßkraft, mit welcher der Hufschuh gegen das Bein des Tieres gepreßt wird, ist auf einfache Weise durch Einstellen eines geeigneten Überdruckes möglich, d.h. je höher der Überdruck ist, desto fester schmiegt sich der Hufschuh an das Bein des Tieres an.

Der Hufschuh ist hierbei in Form einer Manschette ausgebildet, so daß auch bei relativ hohen Überdrücken und einem entsprechend guten Halt am Bein des Tieres das Tier keine Druckstellen an den Beinen davonträgt, wie dies bei den vom Stand der Technik bekannten Riemen oder Gurten der Fall wäre.

In vorteilhafter Weise kann der erfindungsgemäße Hufschuh in zwei Bereiche unterteilt sein, wobei der erste, dem Boden des Hufschuhs zugewandte Bereich bei einer Beaufschlagung mit dem Medium weniger stark dehnbar ist als der oberhalb des ersten Bereichs angeordnete zweite Bereich.

Der feste Sitz des Hufschuhs an dem Bein des Tieres wird durch die Unterteilung des Hufschuhes in zwei Bereiche noch verstärkt, wobei durch die unterschiedlichen Dehnungseigenschaften des ersten und zweiten Bereiches der Hufschuh in dem sich stärker dehnenden zweiten Bereich fest an das Bein des Tieres angepreßt wird.

Dies kann beispielsweise dadurch erreicht werden, daß der Hufschuh im zweiten Bereich eine größere Wanddicke aufweist als im ersten Bereich, oder auch dadurch, daß der erste Bereich und der zweite Bereich aus unterschiedlichen Werkstoffen mit entsprechend unterschiedlichen Dehnungseigenschaften hergestellt sind.

Als Werkstoff für den Hufschuh kann vorzugsweise Gummi verwendet werden. Es liegt jedoch selbstverständlich im Ermessen des Durchschnittsfachmanns, den Hufschuh auch aus einem anderen geeigneten Werkstoff, vorzugsweise einem Kunststoff, zu fertigen.

In vorteilhafter Weise ist das Medium, mit welchem der Hohlraum des Hufschuhs beaufschlagbar ist, Luft.

Durch die Verwendung von Luft als unter Überdruck stehendem Medium ist es beispielsweise möglich, die Hufschuhe mittels aus der Industrie bekannter Kompressoren oder auch gegebenenfalls mittels einer einfachen Fahrradpumpe aufzupumpen und somit den Überdruck zu erzeugen. Der Hufschuh ist hierzu mit einem entsprechenden Ventil versehen.

Anstatt Luft können alternativ auch andere geeignete Medien, beispielsweise Flüssigkeiten, verwendet werden.

Der wenigstens eine Sensor kann in einfacher Weise in in der Metallplatte angeordnete Aussparungen, die vorzugsweise als Bohrungen ausgebildet sind, einsteckbar sein.

Somit können, je nach dem vorgesehenen therapeutischen oder diagnostischen Verwendungszweck der erfindungsgemäßen Vorrichtung, ein oder auch mehrere Sensoren in einfacher Weise vor dem Anbringen des Hufschuhs an dem Tier in die Metallplatte eingesetzt werden.

Dies bedeutet, die Sensoren sind in einfacher Weise austauschbar bzw. können in die entsprechend vorgesehenen Aussparungen in der Metallplatte eingesetzt werden. Hierbei wird man eine Vielzahl von Bohrungen in der Metallplatte vorsehen, wodurch sich die Vorteile ergeben, daß einerseits das Eigengewicht der Metallplatte reduziert wird und andererseits eine Vielzahl von unterschiedlichen Anordnungen des Sensors bzw. der Sensoren in dem Hufschuh möglich ist.

Vorzugsweise können Sensoren, die nach dem Piezo-Prinzip arbeiten, verwendet werden.

In einer sehr vorteilhaften und nicht naheliegenden Weiterbildung der erfindungsgemäßen Vorrichtung kann vorgesehen sein, daß die beim Auftreten des Tieres mit den Hufen auf den Boden von dem Sensor oder den Sensoren erzeugten Signale an eine an dem Tier angebrachte Sendeeinrichtung übermittelbar sind.

Die Signalübertragung von dem Sensor bzw. den Sensoren zu der Sendeeinrichtung kann in einfacher Weise mittels bekannter Datenübertragungsleitungen erfolgen, alternativ kann jedoch auch vorgesehen sein, daß die Übermittlung von den Sensoren zu der Sendeeinrichtung drahtlos erfolgt. Die Datenübertragungsleitungen können hierbei mittels Steckverbindungen bzw. SteckerBuchsen-Kombinationen mit den jeweiligen Bauteilen verbindbar sein.

Die Datenübertragung kann hierbei in allen Gangarten, auch im Galopp erfolgen, wobei auch an allen Hufen des Tieres die beschriebenen Hufschuhe angebracht sein können.

Weiterhin kann die Datenübertragung von dem Sensor/den Sensoren zu der Sendeeinrichtung erfolgen, wenn das Tier an der Hand, unter dem Reiter oder auch im Freilauf bewegt wird. Das Tier kann somit, insbesondere im Pferderenn- und Turniersport, unter realistischen Bedingungen laufen und somit können auch realistische Werte von den Sensoren aufgenommen werden.

Die Sendeeinrichtung selbst kann in einfacher Weise am Röhrbein des Tieres befestigbar sein, was beispielsweise mittels einer Bandage oder einer Gamasche erfolgen kann.

Um die von dem Sensor oder den Sensoren erzeugten Signale beim Auftreten des Tieres auf den Boden zu verstärken, kann der Sendeeinrichtung eine Verstärkungseinrichtung vorgeschaltet sein.

Ein einfaches Anbringen der Verstärkungseinrichtung an dem Tier kann dadurch ermöglicht werden, daß die Verstärkungseinrichtung und die Sensoreinrichtung in einem Gehäuse vorgesehen sind, welches beispielsweise mittels der bereits genannten Bandagen oder Gamaschen am Bein des Tieres befestigbar ist.

Von der Sendeeinrichtung aus können die Signale drahtlos an die elektronische Auswerteeinrichtung übermittelbar sein.

Die Auswerteeinrichtung muß somit nicht mehr, wie beim Stand der Technik, direkt am Tier angebracht sein, sondern sie kann vielmehr unabhängig vom Tier, beispielsweise auch stationär, vorgesehen werden.

Als Auswerteeinrichtungen können z.B. bekannte Personalcomputer oder auch andere mikroprozessorgesteuerte Einrichtungen verwendet werden, wobei z.B. in dem Personalcomputer eine Software vorgesehen ist, mittels welcher die von dem mindestens einen Sensor erzeugten Signale graphisch oder auch tabellarisch dargestellt werden können.

Selbstverständlich umfaßt die Auswerteeinrichtung auch eine Empfangseinrichtung zum Empfangen der von der Sendeeinrichtung gesendeten Signale sowie einen Analog-/Digitalwandler, welcher die von der Empfangseinrichtung empfangenen Analogsignale in von der mikroprozessorgesteuerten Einrichtung verarbeitbare Signale umwandelt.

Nachfolgend ist anhand der Zeichnung ein Ausführungsbeispiel der vorliegenden Erfindung prinzipmäßig beschrieben.

Es zeigt:
- Fig. 1: in dreidimensionaler Ansicht ein Pferd mit angelegten erfindungsgemäßen Hufschuhen,
- Fig. 2: eine dreidimensionale Darstellung eines Hufschuhs mit einer Sendeeinrichtung in vergrößertem Maßstab und in aufgeschnittenem Zustand,
- Fig. 3: in dreidimensionaler Ansicht einen erfindungsgemäßen Hufschuh, und
- Fig. 4: eine dreidimensionale Ansicht einer Auswerteeinrichtung.

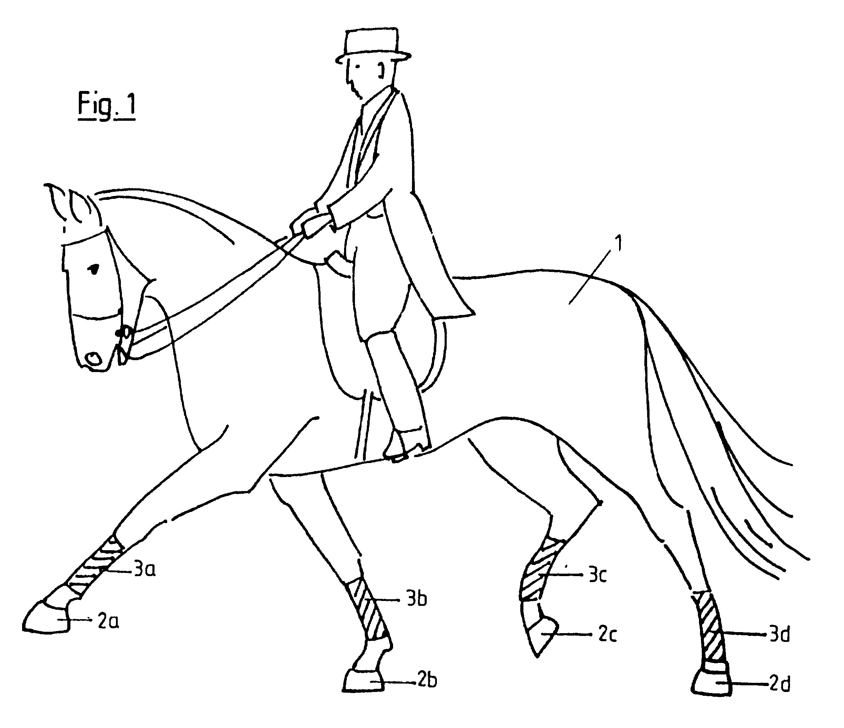

Bezugnehmend auf Fig. 1 ist ein Pferd 1 dargestellt, an dessen Beinen jeweils ein Hufschuh 2a bis 2d angebracht ist.

Am Röhrbein des Pferdes 1 sind jeweils Bandagen 3a bis 3d angebracht, auf welche nachfolgend eingegangen werden soll.

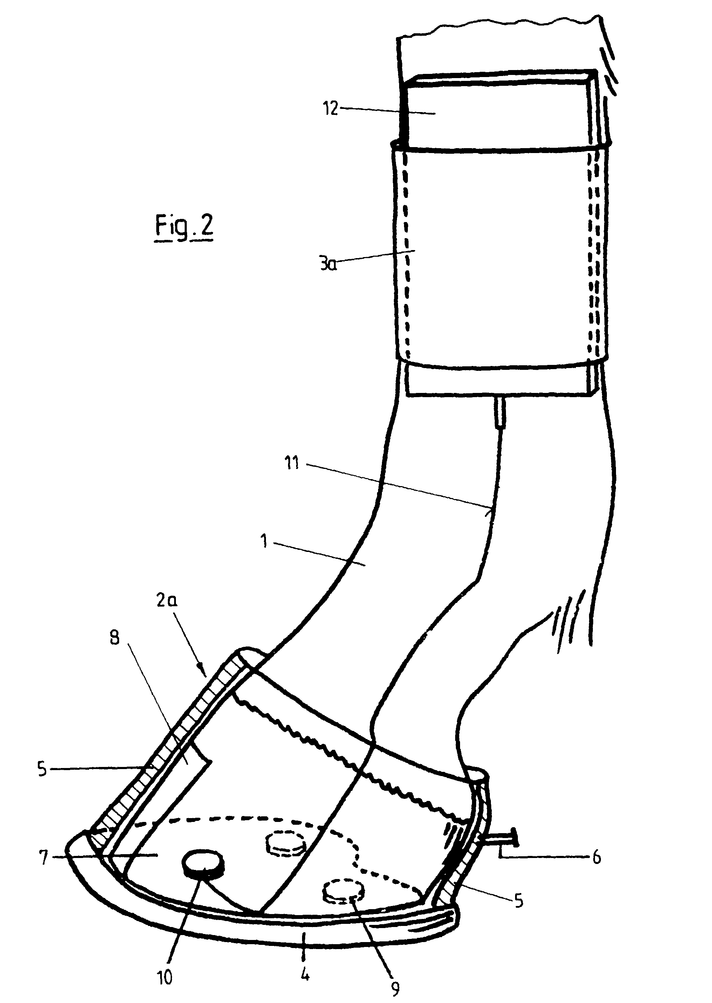

Fig. 2 zeigt in vergrößerter Darstellung ein Bein des Pferdes 1 mit einem zur Verdeutlichung aufgeschnittenen Hufschuh 2a.

Der in der Fig. 2 dargestellte Hufschuh 2a weist eine Sohle 4 sowie einen Hohlraum 5 auf, welcher über ein Ventil 6 mit Luft beaufschlagbar ist, so daß in dem Hohlraum 5 ein Überdruck erzeugt werden kann. Zur Verdeutlichung ist in der Fig. 2 der den Huf des Pferdes 1 manschettenartig umgebende Hohlraum 5 des Hufschuhs 2a schraffiert dargestellt.

Bei der Beaufschlagung des Hohlraumes 5 mit unter Überdruck stehender Luft schmiegt sich der aus einem elastischen Werkstoff, wie beispielsweise Gummi, hergestellte Hufschuh 2a an das Bein des Pferdes 1 an und wird hierdurch an diesem festgehalten.

Auf der Sohle 4 des Hufschuhs 2a ist eine Metallplatte 7 mit einem Stabilisator 8 vorgesehen, wobei der Stabilisator 8 zur Stabilisierung des Hufschuhs 2a am Huf des Pferdes 1 dient. Es können hierbei mehrere Stabilisatoren 8 vorgesehen sein, die beispielsweise im Zehenbereich oder seitlich am Huf des Pferdes 1 angeordnet sind. Die Metallplatte 7 ist mit mehreren Aussparungen versehen, die in dem vorliegenden Ausführungsbeispiel als Bohrungen 9 ausgebildet sind.

In der Darstellung nach der Fig. 2 ist in eine der Bohrungen 9 ein nach dem Piezo-Prinzip arbeitender Sensor 10 eingesetzt, welcher über eine Datenübertragungsleitung 11 mit einem Gehäuse 12 verbunden ist, in welchem sich eine nicht dargestellte Verstärkungseinrichtung sowie eine Sendeeinrichtung befinden.

Das Gehäuse 12 ist mittels der Bandage 3a am Röhrbein des Pferdes 1 befestigt.

Selbstverständlich kann das Gehäuse 12 außer der Sendeeinrichtung und der Verstärkungseinrichtung auch noch andere Einrichtungen enthalten, wie beispielsweise ein Batteriefach zur Versorgung der Sendeeinrichtung und der Verstärkungseinrichtung mit elektrischer Energie.

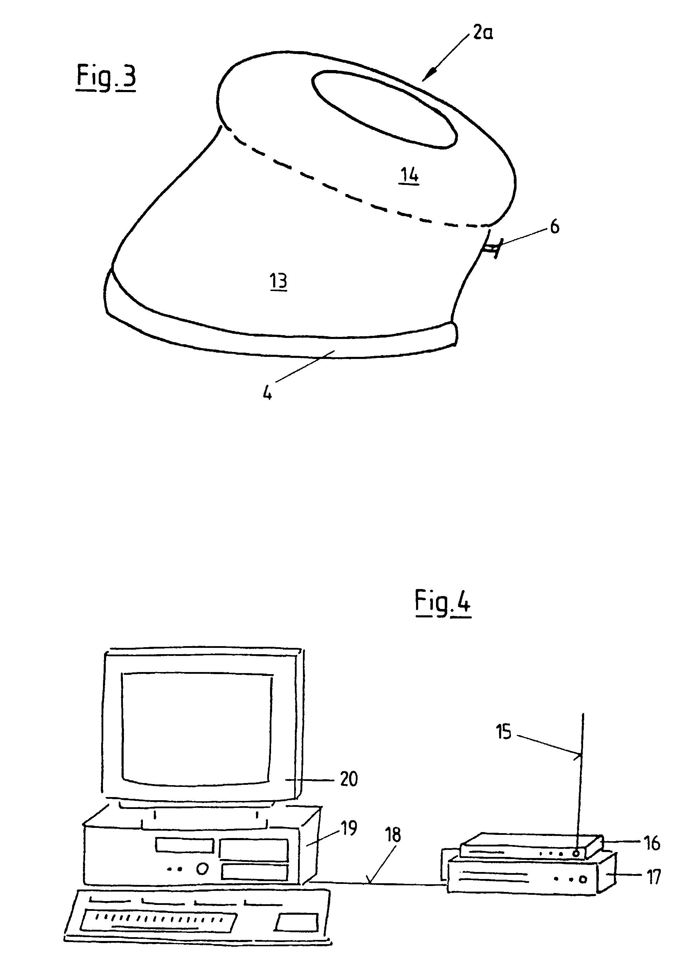

Fig. 3 zeigt eine dreidimensionale Ansicht des Hufschuhs 2a, aus der ersichtlich ist, daß der Hufschuh 2a, wie durch die gestrichelte Linie angedeutet, in zwei Bereiche unterteilt ist, nämlich in einen dem Boden des Hufschuhs 2a bzw. der Sohle 4 zugewandten ersten Bereich 13, sowie einen oberhalb des ersten Bereiches 13 angeordneten zweiten Bereich 14.

Beide Bereiche 13, 14 umschließen den Hohlraum 5 (siehe Fig. 2), der mit über das Ventil 6 zugeführter Luft beaufschlagbar ist.

Allerdings weist der erste Bereich 13 eine gegenüber dem zweiten Bereich 14 größere Wandstärke auf, so daß bei einer Beaufschlagung des Hohlraums 5 mit Luft der zweite Bereich 14 sich aufgrund seiner geringeren Wandstärke stärker ausdehnen wird als der erste Bereich 13.

Durch diese Anordnung wird sich der Hufschuh 2a insbesondere im zweiten Bereich 14 fest an das Bein des Pferdes 1 anschmiegen und ein Verrutschen oder Wegrutschen des Hufschuhs 2a ist hierdurch ausgeschlossen.

Fig. 4 zeigt ein Ausführungsbeispiel einer elektronischen Auswerteeinrichtung, welche eine mit einer Antenne 15 versehene Empfangseinrichtung 16 sowie einen mit der Empfangseinrichtung 16 verbundenen Analog-/Digitalwandler 17 enthält, von dem aus über eine Verbindungsleitung 18 digitale Daten einer als Personalcomputer 19 ausgeführten mikroprozessorgesteuerten Einrichtung zuführbar sind. In dem Personalcomputer 19 ist eine geeignete Software vorgesehen, mittels welcher die von dem Sensor 10 erzeugten Signale beispielsweise graphisch oder tabellarisch auf einem mit dem Personalcomputer 19 verbundenen Bildschirm 20 darstellbar sind.

In dem dargestellten Ausführungsbeispiel ist die Auswerteeinrichtung stationär vorgesehen, diese kann jedoch selbstverständlich auch mobil sein, was beispielsweise durch den Einsatz eines tragbaren Personalcomputers 19 (Laptop, Notebook) erreichbar ist.

Mit der vorstehend beschriebenen Vorrichtung ist es möglich, die durch das Aufsetzen jedes einzelnen Hufes des Pferdes 1 entstehende vertikale Kraft in eine der Kraft proportionale Spannung umzuwandeln, den Wert der Spannung drahtlos an die Empfangseinrichtung 16 zu senden und in der Auswerteeinrichtung zu verarbeiten. Das Pferd 1 kann hierbei entweder an der Hand, unter dem Reiter oder im Freilauf bewegt werden, und zwar in den drei Grundgangarten Schritt, Trab und Galopp sowie über ein oder mehrere Sprünge.

Während der Bewegung des Pferdes erfolgt, wie bereits erwähnt, von den in den Gehäusen 12 eingebauten Sendeeinrichtungen eine drahtlose Übertragung der von den Sensoren 10 erzeugten Signale zu der Auswerteeinrichtung, wobei die verwendeten Sendefrequenzen im Bereich zwischen 169 bis 210 Megahertz liegen.

Die von der Empfangseinrichtung 16 empfangenen analogen Signale liegen im Spannungsbereich von 0 bis 10 Volt und werden in dem Analog-/Digitalwandler 17 digitalisiert und zu dem Personalcomputer 19 weitergeleitet.

Mit der beschriebenen Vorrichtung ist eine objektive Beurteilung der symmetrischen Belastung aller vier Gliedmaßen, der Taktmäßigkeit, der Gewichtsverteilung von Vorder- und Hintergliedmaßen sowie die Beeinflußbarkeit dieser Faktoren, die entweder durch den Reiter oder andere Hilfsmittel erfolgen kann, möglich. Somit kann eine Bewegungsanalyse auf einfache Art und Weise erfolgen.

Bei der Diagnose von Lahmheiten bietet die dargestellte Vorrichtung den Vorteil, daß eine subjektive Beurteilung durch das Auge der untersuchenden Person ersetzt oder durch die von den Sensoren 10 gemessenen exakten Meßwerte ergänzt werden kann.

Des weiteren ist eine Therapieerfolgskontrolle möglich, da z.B. der Lahmheitsgrad eines Pferdes durch exakte Meßwerte definiert werden kann und die Veränderungen des Lahmheitsgrades im Verlauf einer Therapie mit Medikamenten in Bezug auf Dosishöhe, Anflutzeit, Behandlungsdauer usw. genau kontrollierbar sind.

Die Vorrichtung kann auch zu Lehrzwecken eingesetzt werden, beispielsweise dann, wenn veranschaulicht werden soll, wie sich eine Korrektur des Hufes durch Kürzen an bestimmten Hufregionen unmittelbar auf die Belastungsverhältnisse an bestimmten Punkten der Hufsohle auswirkt.

Selbstverständlich kann die beschriebene Vorrichtung auch präventiv eingesetzt werden, z.B. in dem ein Tier regelmäßig an die Vorrichtung "angeschlossen" wird, wodurch Veränderungen der Kraftverteilung beim Auftreffen des Hufes auf dem Boden sofort ersichtlich sind und Krankheiten und/oder Schäden bereits im Frühstadium erkannt werden können.

## Patentansprüche

1. Vorrichtung zur Bewegungsanalyse und Lahmheitsdiagnostik bei Tieren, insbesondere bei Pferden (1), mit wenigstens einem mit mindestens einem Sensor (10) versehenen Hufschuh (2a,2d), welcher über wenigstens einen Huf des Tieres (1) stülpbar ist, wobei der Sensor (10) in einer Metallplatte (7) im Bodenbereich des Hufschuhs (2a,2d) angeordnet ist und von dem Sensor (10) erzeugte Signale einer elektronischen Auswerteeinrichtung zuführbar sind,
**dadurch gekennzeichnet ,** daß
der Hufschuh (2a-2d) aus einem elastisch verformbaren Werkstoff gefertigt ist, und einen Hohlraum (5) enthält, welcher mit einem unter Überdruck stehenden Medium beaufschlagbar ist.

2. Vorrichtung nach Anspruch 1,
**dadurch gekennzeichnet,** daß
der Hufschuh in zwei Bereiche (13,14) unterteilt ist, wobei der erste, dem Boden des Hufschuhs (2a-2d) zugewandte Bereich (13) bei einer Beaufschlagung mit dem Medium weniger stark dehnbar ist als der oberhalb des ersten Bereichs (13) angeordnete zweite Bereich (14).

3. Vorrichtung nach Anspruch 2,
**dadurch gekennzeichnet,** daß
der Hufschuh (2a-2d) im ersten Bereich (13) eine grössere Wanddicke aufweist als im zweiten Bereich (14).

4. Vorrichtung nach Anspruch 2,
**dadurch gekennzeichnet,** daß
der erste Bereich (13) und der zweite Bereich (14) aus unterschiedlichen Werkstoffen hergestellt sind, wobei der Werkstoff im zweiten Bereich (14) leichter elastisch verformbar ist als der Werkstoff im Bereich (13).

5. Vorrichtung nach einem der Ansprüche 1 bis 4,
**dadurch gekennzeichnet** , daß
der Hufschuh (2a-2d) aus Gummi gefertigt ist.

6. Vorrichtung nach einem der Ansprüche 1 bis 5,
**dadurch gekennzeichnet ,** daß
das Medium Luft ist.

7. Vorrichtung nach einem der Ansprüche 1 bis 6,
**dadurch gekennzeichnet ,** daß
der mindestens eine Sensor (10) in in der Metallplatte (7) angeordnete Aussparungen (9) einsteckbar ist.

8. Vorrichtung nach Anspruch 7,
**dadurch gekennzeichnet ,** daß
die Aussparungen als Bohrungen (9) ausgebildet sind.

9. Vorrichtung nach einem der Ansprüche 1 bis 8,
**dadurch gekennzeichnet** , daß
der mindestens eine Sensor (10) nach dem PiezoPrinzip arbeitet.

10. Vorrichtung zur Bewegungsanalyse und Lahmheitsdiagnostik bei Tieren, insbesondere bei Pferden (1), mit wenigstens einem mit mindestens einem Sensor (10) versehenen Hufschuh (2a,2d), welcher über wenigstens einen Huf des Tieres (1) stülpbar ist, nach einem der Ansprüche 1 bis 9,
**dadurch gekennzeichnet,** daß
die von dem mindestens einen Sensor (10) erzeugten Signale an wenigstens eine an dem Tier (1) angebrachte Sendeeinrichtung übermittelbar sind.

11. Vorrichtung nach Anspruch 10,
**dadurch gekennzeichnet,** daß
die wenigstens eine Sendeeinrichtung am Röhrbein des Tieres (1) befestigbar ist.

12. Vorrichtung nach Anspruch 10 oder 11,
**dadurch gekennzeichnet,** daß
die wenigstens eine Sendeeinrichtung mittels einer Bandage (3a-3d) oder einer Gamasche an dem Tier (1) befestigbar ist.

13. Vorrichtung nach einem der Ansprüche 10 bis 12,
**dadurch gekennzeichnet,** daß
jeder Sendeeinrichtung eine Verstärkungseinrichtung zum Verstärken der von dem mindestens einem Sensor (10) erzeugten Signale vorgeschaltet ist.

14. Vorrichtung nach Anspruch 13,
**dadurch gekennzeichnet,** daß
die Verstärkungseinrichtung und die Sendeeinrichtung in einem Gehäuse (12) vorgesehen sind.

15. Vorrichtung nach einem der Ansprüche 10 bis 14,
**dadurch gekennzeichnet,** daß
die Signale von der Sendeeinrichtung drahtlos an die Auswerteeinrichtung übermittelbar sind.

## Claims

1. Device for the analysis of movement and the diagnosis of lameness in animals, in particular in horses (1), comprising at least one hoof shoe (2a, 2d) which is provided with at least one sensor (10) and can be put on at least one hoof of the animal (1), wherein the sensor (10) is arranged in a metal plate (7) in the bottom region of the hoof shoe (2a, 2d) and signals produced by the sensor (10) can be supplied to an electronic evaluator, characterised in that the hoof shoe (2a-2d) is made of an elastically deformable material and contains a cavity (5) which can be pressurised by a medium under excess pressure.

2. Device according to claim 1, characterised in that the hoof shoe is divided into two regions (13, 14), the first region (13) directed towards the bottom of the hoof shoe (2a-2d) being less strongly extensible than the second region (14) arranged above the first region (13) when the medium is applied thereto.

3. Device according to claim 2, characterised in that the hoof shoe (2a-2d) has a greater wall thickness in the first region (13) than in the second region (14).

4. Device according to claim 2, characterised in that the first region (13) and the second region (14) are made of different materials, the material in the second region (14) being more easily elastically deformable than the material in the region (13).

5. Device according to one of claims 1 to 4, characterised in that the hoof shoe (2a-2d) is made of rubber.

6. Device according to one of claims 1 to 5, characterised in that the medium is air.

7. Device according to one of claims 1 to 6, characterised in that the at least one sensor (10) can be inserted into recesses (9) arranged in the metal plate (7).

8. Device according to claim 7, characterised in that the recesses are in the form of bores (9).

9. Device according to one of claims 1 to 8, characterised in that the at least one sensor (10) operates according to the piezoelectric principle.

10. Device for the analysis of movement and the diagnosis of lameness in animals, in particular in horses (1), comprising at least one hoof shoe (2a, 2d) which is provided with at least one sensor (10) and can be put on at least one hoof of the animal (1), according to one of claims 1 to 9, characterised in that the signals produced by the at least one sensor (10) can be transmitted to at least one transmitter fitted to the animal (1).

11. Device according to claim 10, characterised in that the at least one transmitter can be secured to the cannon bone of the animal (1).

12. Device according to claim 10 or claim 11, characterised in that the at least one transmitter can be secured to the animal (1) by means of a bandage (3a-3d) or a boot.

13. Device according to one of claims 10 to 12, characterised in that an amplifier for amplifying the signals produced by the at least one sensor (10) is arranged upstream of each transmitter.

14. Device according to claim 13, characterised in that the amplifier and the transmitter are provided in a housing (12).

15. Device according to one of claims 10 to 14, characterised in that the signals can be transmitted from the transmitter to the evaluator by radio.

## Revendications

1. Dispositif pour analyser des mouvements et diagnostiquer une claudication chez des animaux, notamment des chevaux (1), comportant au moins une chaussure de sabot (2a, 2d) équipée d'au moins un détecteur (10), cette chaussure de sabot pouvant être enfoncée sur au moins un sabot de l'animal (1), le détecteur (10) étant disposé dans une plaque métallique (7) dans la zone du fond de la chaussure de sabot (2a, 2d), et des signaux générés par le détecteur (10) pouvant être transmis à un dispositif de traitement électronique,
**caractérisé en ce que** la chaussure de sabot (2a-2d) est réalisée en un matériau élastique déformable et comporte une cavité (5) pouvant être chargée d'un fluide sous surpression.

2. Dispositif selon la revendication 1,
**caractérisé en ce que** la chaussure de sabot est partagée en deux zones (13, 14), la première zone (13) tournée vers le fond de la chaussure de sabot (2a-2d) étant moins extensible lors de l'admission du fluide que la deuxième zone (14) disposée au-dessus de la première zone (13).

3. Dispositif selon la revendication 2,
**caractérisé en ce que** la chaussure de sabot (2a-2d) présente dans la première zone (13) une épaisseur de paroi plus importante que dans la deuxième zone (14).

4. Dispositif selon la revendication 2,
**caractérisé en ce que** la première zone (13) et la deuxième zone (14) sont réalisées en des matériaux différents, le matériau dans la deuxième zone (14) étant plus facilement déformable que le matériau dans la zone (13).

5. Dispositif selon l'une des revendications 1 à 4,
**caractérisé en ce que** la chaussure de sabot (2a-2d) est fabriquée en caoutchouc.

6. Dispositif selon l'une des revendications 1 à 5,
**caractérisé en ce que** le fluide est de l'air.

7. Dispositif selon l'une des revendications 1 à 6,
**caractérisé en ce que** le au moins un détecteur (10) est enfichable dans les évidements (9) disposés dans la plaque métallique (7).

8. Dispositif selon la revendication 7,
**caractérisé en ce que** les évidements sont formés par des alésages (9).

9. Dispositif selon l'une des revendications 1 à 8,
**caractérisé en ce que** le au moins un détecteur (10) fonctionne selon le principe piézo-électrique.

10. Dispositif pour analyser des mouvements et diagnostiquer une claudication chez des animaux, notamment des chevaux (1), comportant au moins une chaussure de sabot (2a, 2d) équipée d'au moins un détecteur (10), cette chaussure de sabot pouvant être enfoncée sur au moins un sabot de l'animal (1), selon l'une des revendications 1 à 9,
**caractérisé en ce que** les signaux générés par le au moins un détecteur (10) peuvent être transmis à au moins un dispositif émetteur fixé sur l'animal (1).

11. Dispositif selon la revendication 10,
**caractérisé en ce que** le au moins un dispositif émetteur peut être fixé au canon de l'animal (1).

12. Dispositif selon la revendication 10 ou 11,
**caractérisé en ce que** le au moins un dispositif émetteur peut être fixé sur l'animal (1) au moyen d'un bandage (3a-3d) ou d'une guêtre.

13. Dispositif selon l'une des revendications 10 à 12,
**caractérisé en ce qu**'un dispositif amplificateur est monté en amont de chaque dispositif émetteur pour amplifier les signaux générés par le au moins un détecteur (10).

14. Dispositif selon la revendication 13,
**caractérisé en ce que** le dispositif amplificateur et le dispositif émetteur sont prévus dans un boîtier (12).

15. Dispositif selon l'une des revendications 10 à 14,
**caractérisé en ce que** les signaux du dispositif émetteur peuvent être transmis sans fil au dispositif de traitement.
